(19) **Europäisches Patentamt**
**European Patent Office**
**Office européen des brevets**

(11) **EP 2 234 305 B1**

(12) **EUROPEAN PATENT SPECIFICATION**

(45) Date of publication and mention
of the grant of the patent:
**02.08.2017 Bulletin 2017/31**

(51) Int Cl.:
$H04L\ 1/00^{(2006.01)}$    $H04L\ 1/02^{(2006.01)}$
$H04L\ 1/08^{(2006.01)}$

(21) Application number: **09156494.8**

(22) Date of filing: **27.03.2009**

(54) **Method of reliable communications by splitting redundant data into CRC sub-blocks best reassembled at the receiver**

Verfahren für zuverlässige Kommunikation durch Teilung redundanter Daten in vom Empfänger gut zusammensetzbare CRC-Subblöcke

Procédé de communications fiables en divisant les données redondantes dans des sous-blocs CRC réassemblées au mieux sur le récepteur

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**29.09.2010 Bulletin 2010/39**

(73) Proprietor: **Nokia Solutions and Networks Oy 02610 Espoo (FI)**

(72) Inventor: **Bottiroli, Andrea 20060, Gorgonzola (MI) (IT)**

(74) Representative: **Borgström, Markus et al Nokia Solutions and Networks GmbH & Co. KG T&I IPR Patent Administration St.-Martin-Straße 76 80240 München (DE)**

(56) References cited:
**WO-A1-02/098003**    **JP-A- 2000 349 792**

• **OGUZ N C ET AL: "PERFORMANCE ANALYSIS OF TWO-LEVEL FORWARD ERROR CORRECTION FOR LOSTCELL RECOVERY IN ATM NETWORKS" PROCEEDINGS OF INFOCOM '95 - CONFERENCE ON COMPUTER COMMUNICATIONS. FOURTEENTH ANNUAL JOINT CONFERENCE OF THE IEEE COMPUTER AND COMMUNICATIONS SOCIETIES, BOSTON APR. 2 - 6, 1995; [PROCEEDINGS OF INFOCOM], LOS ALAMITOS, IEEE COMP. SOC. PRESS, US, vol. 2, 2 April 1995 (1995-04-02), pages 728-737, XP000580642 ISBN: 978-0-7803-2524-1**

**Description**

**FIELD OF THE INVENTION**

The present invention relates to the field of reliable communications, and more precisely to a method of reliable communications by splitting redundant data into CRC sub-blocks best reassembled at the receiver. The invention can be implemented either by means of diversity techniques on the radio channel or by duplication of apparatuses with interconnecting physical mediums, like cable, wire, and optical fibre.

**BACKGROUND ART**

Reliable communications put some countermeasures into action for counteracting possible breakings of the apparatuses, interruptions of the physical medium used to transmit, and severe quality deteriorations of the received signal. The type of countermeasure depends on the specific cause it is directed to. For example, when a bit stream is sent from a transmitter to a receiver through a channel, occasional isolated errors or error bursts may occur in the received bit stream because of the nature of the channel, as: radio path, cable, wire, optical fibre, infrareds, sound path, etc. In a wider scope, the term channel could encompass also the path crossed by a signal originated from reading an information pattern registered on a physical support, e.g. disk, tape, CD, DVD, etc. towards the detector, and vice versa to writing operation. As known in the art, channels are never ideal but they introduce various types of distortions on the transmitted signal. If not adequately provided, distortions might increase the bit error rate (BER) afflicting an estimate of the transmitted data sequence over a permitted threshold. For example, in radio relay system multipath fading can be a frequent source of such errors. Complex error detection and correction schemes are often used on a digital channel to detect and correct these occasional errors. Especially in radio communications, in order to improve bit error rate, diversity techniques are used by means of which a transmitted bit stream is received along two statistically independent signal paths, so that the receiver can select the most favourable of the two received signals based on a best quality parameter measured on both of them. Diversity techniques add a supplementary redundancy to the one already introduced by coding the information bits. Many diversity techniques are known, e.g. spatial diversity like SIMO, MIMO, frequency diversity, and polarization diversity.

For channels different from the free space, the term diversity is not completely appropriate to indicate the redundancy other than coding, but duplication sounds better. In fact, while in radio communications the channel is always the free space, in presence of physical medium like cable, wire, and optical fibre, redundancy also means physical duplication of them. When the equipment used along the channel breaks, all of the communicated bits may be lost for an extended period of time. Failures of this kind are often handled by providing duplicate hot standby equipment that can be switched into service after the failure has been detected. Such hot standby switching normally is associated with a short period of high bit errors.

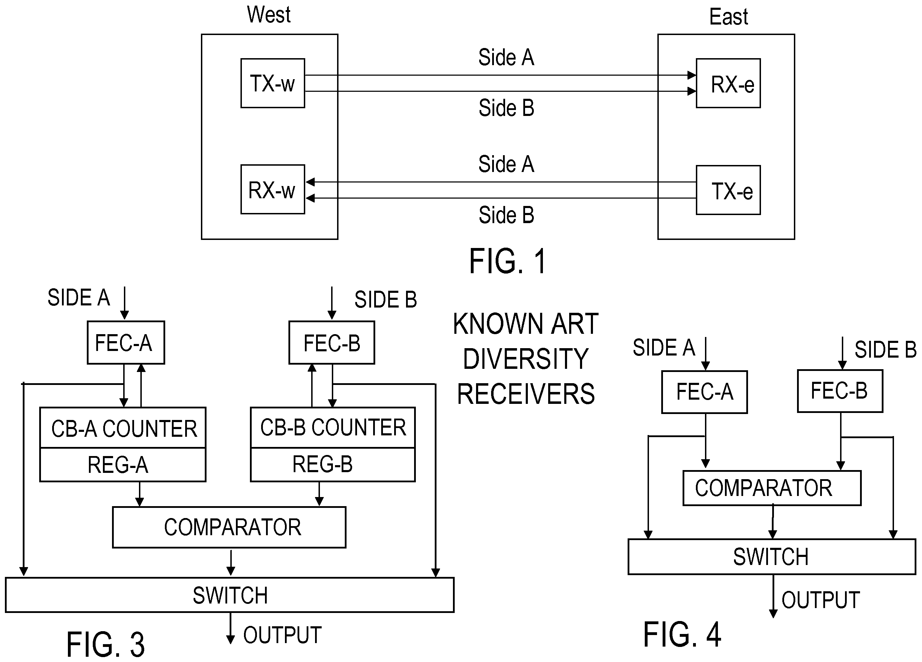

**Fig.1** schematizes two-ways (West-East) redundant communication link based on two independent communication channels, called Side A and Side B, both of them for each direction. The West node includes a transmitter TX-w and a receiver RX-w. The East node includes a transmitter TX-e and a receiver RX-e. According to the scheme of **fig.1**, the transmitter TX-w is connected to the receiver RX-e through both Side A and Side B channels. In its turn, the transmitter TX-e is connected to the receiver RX-w through both Side A and Side B channels. Some known strategies implemented by the receivers RX-e and RX-w are illustrated in the successive **figures 3** and **4.** The redundant communication link of **fig.1** can be interpreted so as to encompass diversity and duplication. For example, the following opportunities are foreseeable:

- There are two transmitters inside block TX-w, a first one transmitting on Side A physical medium like cable, wire, optical fibre, and the second one transmitting on Side B similar physical medium. Block RX-e includes two front-end receivers for respective. The same applies for TX-e and RX-w. This is a case of pure redundancy of the channel and the equipment.

- There are two transmitters inside block TX-w, a first one transmitting on Side A by means of a first antenna, and the second one transmitting on Side B by means of a second antenna. Block RX-e includes two front-end receivers, each one receiving by means of an its own antenna. The same applies for TX-e and RX-w. This is a mixed case of redundancy with diversity, being impossible to assign a specific radio path to the single link.

- There is one only transmitter inside TX-w which transmits on the free space. Block RX-e includes two front-end receivers, each one receiving by means of an its own antenna. A first receiver can be conventionally assigned to Side A and the other to Side B. The same applies for TX-e and RX-w. This is a case of pure spatial diversity only devoted to improve the quality of the estimated data but not to recovery the continuity of the link upon a failure of the transmitter. In other words, there is not redundancy at the transmission side.

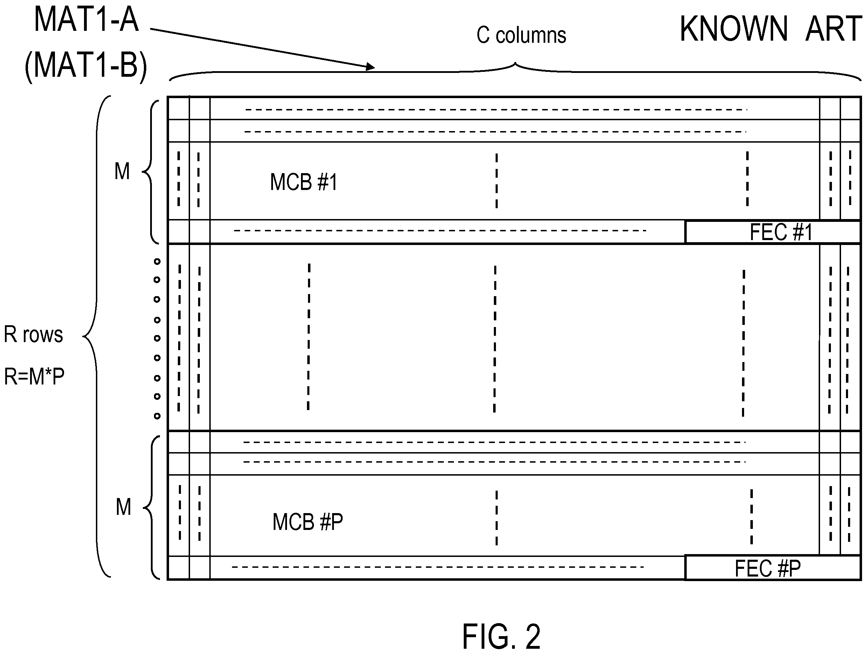

**Fig.2** shows the structured TDM frame travelling on both Side A and Side B channels of the redundant communication link sketched in **fig.1**. Structuring is performed by filling a matrix MAT1 of C columns and R rows with W-bit data words belonging to a number P of MCB block code, namely MCB #1 to MCB #P. Each block code being composed of M consecutive rows terminating with the FEC field for that block, namely FEC #1 to FEC #P. Matrix MAT1 is filled rows-by-rows for a total of R = M x P rows. The content of every MCB block is a message compliant with the relevant communication protocol, namely: Ethernet, IP, frame relay, etc.

Theory of FEC is reported in a lot of bibliographic references, for example, in section 8.1 (Linear Block Codes) of the volume cited at [Ref.1]. In short, a block code $(n,k)$ with rate $R = k/n$ has code-words of $n$ bits, information sequences of $k$ bits for block, and thus redundancy sequences of $r=n-k$ bits. The encoded sequence $\mathbf{V}_{1\times n} = \mathbf{U}_{1\times k} \cdot \mathbf{G}_{k\times n}$ to be transmitted is obtained multiplying the information sequence $\mathbf{U}_{1\times k}$ by a code generator matrix $\mathbf{G}_{k\times n}$. A parity-check matrix $\mathbf{H}$ is derived from $\mathbf{G}_{k\times n}$ (or vice versa) such that these two matrixes enjoy the orthogonal property, $\mathbf{G}_{k\times n} \cdot \mathbf{H}^T_{r\times n} = 0$. At the receiving side the following equation $\mathbf{H}_{r\times n} \cdot \mathbf{B}^T_{n\times 1} = 0$ should be satisfied:, where $\mathbf{B}^T_{n\times 1}$ is the decoded sequence. If the last equation is verified the information signal estimate is correct, otherwise the errors in the received sequence exceed the correction capacity of the code. To the aim of correction a vector $\mathbf{S}_{n-k} = \mathbf{e}_{1\times n} \cdot \mathbf{H}^T_{r\times n}$, called the syndrome of the error pattern $\mathbf{e}$, is computed. The syndrome includes as elements different from zero as the number of parity check equations that are not satisfied. From the syndrome computation of a $(n,k)$ code with minimum distance $d_{min}$, a number of $d_{min}$ -1 errors can be detected but only $t = \lfloor \frac{1}{2}(d_{min}-1) \rfloor$ can be corrected, were $\lfloor x \rfloor$ denotes the largest integer contained in x. This correction technique called forward error correction is known in the art.

In **fig.3** we see the known redundant structure of a first receiver, such as RX-e and RX-w of **fig.1**. The input structure of the receiver is duplicated for receiving two independent bit streams arranged like MAT1 from Side A and Side B. Each duplicated structure includes the cascade of: **a)** an error correction unit, either FEC-A or FEC-B, which processes the FEC bits FEC #1, ....., FEC #P of MAT1; b) a syndrome counter, either CB-A COUNTER or CB-B COUNTER, which counts block code by block code the errored bits, whose counting is made available from forward error correction algorithm; **c)** a BER register, either REG-A or REG-B, which accumulates the respective syndromes detected into the whole frame period of MAT1 or multiple of it; **d)** a comparator fed by the BERs provided by both REG-A and REG-B; **e)** a digital switch controlled by the output signal of the comparator in order to select either the one or the other bit stream corrected by FEC-A and FEC-B. In operation, if a predetermined BER is exceeded in one of the signal paths in the time period, the corresponding signal in the other signal path is selected before the end of time period. If the predetermined bit error rate is not exceeded by either of the first and second signal paths in the time period, the selected signal path may remain unchanged, or the signal path with the lowest number of estimated errors may be selected after the end of period. The method may provide errorless switching from one signal path to the other signal path.

An improvement of this method is achieved by the known structure of the redundant receiver of **fig.4**, which differently from the receiver of **fig.3** performs the selection of the best signal path block code by block code of MAT1. As a consequence, the receiver of **fig.4** is simpler than the one of **fig.3**, being the syndrome counters and the BER registers not more necessary.

Albeit one step ahead towards reliable communications is accomplished by the receiver of **fig.4**, the results are not yet completely satisfactory. The fact is due to a certain intrinsic rigidity of the mechanism for the selection of the best received signal, which only relies upon switching piloted by the most favourable syndrome count. As known, the longer the block code the more efficiency can be achieved by the FEC mechanism, but in the meanwhile the probability of having at least one signal path free from errors decreases. This lead to a switch between both errored signal paths in any case. Besides, the choice of a too long block code is not always possible or advisable. Usually, the maximum length of block code is established by the specific MAC protocol according to a trade-off between opposite aims. A too long block code needs a lot of resources for buffering the incoming data, then it introduces an excessive latency in the communications due to the decoding time.

The document D1 "JP 2000 349792 A" discloses the forming of plural blocks each block being monitored by an individual check code, and an overall check code monitoring the transmisssion data unit as a whole.

The IEEE article D2 "Performance Analysis of Two-Level Forward Error Correction for Lost Recovery in ATM Networks" discusses the use of a two-level forward error correction scheme for virtual channel and virtual path connections in ATM networks exploiting simple block coding and code interleaving.

## SUMMARY OF THE INVENTION

Before summarizing the invention it is useful clarifying that an error check facility like the Cyclic Redundancy Code (CRC) provides a number derived from a set of data that will be transmitted. By recalculating the CRC at the remote end and comparing it to the value originally transmitted, the receiving node can detect some types of transmission errors.

In view of the state of the art described, it is an object of the present invention to provide a method of communication including the steps of:

- receiving from two independent channels at least a first and a second respective sequence of information words, coincident at the transmission side, each sequence being considered as spanning M consecutive rows of a respective first and second matrix both including an error check code appended to the end of each one of the C columns of said matrixes relevant to the information words of that column, and further including a dedicated field of error correction code relevant to the additional row including all error check codes;
- selecting the best additional row of all error check codes between the first and the second matrix, on the basis of the check of respective dedicated error correction code;
- partitioning each column of both matrixes into a number S of sub-columns each one of N information words;
- for every couple of columns which correspond in both partitioned matrixes, performing all possible combinations of ub-columns taken from the first or the second partitioned matrix without changing the order they had in the original column, obtaining $2^S$ composite columns each of S sub-columns sorted as in their original columns;
- for each group of $2^S$ composite columns, calculating the $2^S$ error check codes of the composite columns and compare the calculated code with the error check code stored in said best additional row at the position of the couple of columns originating the group;
- for each group of $2^S$ composite columns, incrementing a score assigned to each sub-column every time a composite column which includes it fails the parity check;
- for each group of $2^S$ composite columns, selecting the S best sub-columns with the lowest score for building a corresponding best column of a final best matrix containing an improved reception of the originally transmitted sequence of information words, as also described in claim 1.

The features of the present invention which are considered to be novel are set forth with particularity in the appended claims.

According to an embodiment of the invention, said first and second matrixes further includes other respective sequences of information words, being coincident at the transmission side, each sequence spanning consecutive rows of its accommodating matrix and contributing to the CRC fields of the C columns together with the first and the second sequence.

Profitably, the first and second sequences are mapped into respective block codes, each one including a foreword error correction code.

According to another aspect of the invention, the sequence of information words stored in the best matrix is further subjected to foreword error correction.

Other object of the invention is a receiver having means to implement the method described above.

Other object of the invention is a radio transmitter having means to build at least a sequence of information words mapped into block codes, each block code including an error correction code and being configurable as spanning M consecutive rows of a matrix of C columns, said matrix being transmitted row-by-row on the radio channel and including:

- an error check code appended to the end of each one of the C columns of said matrix relevant to the M information words of that column;
- a dedicated field of error correction code relevant to the additional row including all error check codes.

Profitably, the radio transmitter has means to build another identical sequence of information words arranged in a second matrix as done for the former matrix, the second matrix being transmitted row-by-row on a diversity radio channel.

Other object of the invention is a transmitter having means to build a first and a second identical sequences of information words to be transmitted by two independent channels, both sequences of information words being mapped into block codes, each block code including an error correction code and being configurable as spanning M consecutive rows of a respective first and second matrix of C columns, said matrixes being transmitted row-by-row on respective radio channels and including:

- an error check code appended to the end of each one of the C columns of said matrix relevant to the information words of that column;
- a dedicated field of error correction code relevant to the additional row including all error check codes.

Profitably, the two independent channels exploit disjoint physical mediums, like: cable, wire, optical fibre.

In general, in one aspect, the invention features a method for reducing errors in communication of a stream of information bits by incorporating both an error correction facility (e.g. Block Code) and an error check facility in the information (e.g. Cyclical Redundancy Code), and sending the information on two independent communication channels. After performing error correction on both the communication channels by means of forward error correction algorithm, signal path selection is based on the innovative algorithm disclosed above that can be called "Best Of Two Transmitted Information" (BOTTI), for error checking analysis of information sent on both of the channels and composing the best combination among information sub-units received from the twos.

## ADVANTAGES OF THE INVENTION

Thanks to the proposed invention, duplicate channel equipment already used to accommodate equipment failures may also be used to deal with occasional bit errors and the errors caused by multipath fading. Switching may be performed extremely quickly and in an errorless fashion.

Complex error coding system to achieve a full error correction capability at the receiver may no longer be needed. Consequently, the amount of redundant information that must be carried on each channel is reduced, to the all benefit of the throughput. Performance, in term of residual BER, is improved.

Lastly, the invention may be implemented in relatively simple, inexpensive circuitry.

## BRIEF DESCRIPTION OF THE DRAWINGS

The invention and its advantages may be understood with reference to the following detailed description of an embodiment thereof taken in conjunction with the accompanying drawings given for purely non-limiting explanatory purposes and wherein:

- **fig.1** schematizes a two-ways (West-East) redundant communication link based on two independent communication channels, called Side A and Side B;
- **fig.2** shows the known temporal structure of a frame travelling on both Side A and Side B of the redundant communication link sketched in fig.1;
- **fig.3** shows the known architecture of a first receiver correspondent to either blocks RX-e or RX-w inside the East/West equipments of fig.1;
- **fig.4** shows the known architecture of a second receiver;
- **fig.5** shows the temporal structure of a transmission frame build according to the present invention;
- **fig.6** shows the temporal structure of a frame derived from the frame of fig.5 at the receiver side, according to the present invention;
- **fig.7** shows the architecture of the receiver RX-e or RX-w realized according to the present invention;
- **fig.8** shows a block diagram which schematizes the operation of the receiver of fig.7;
- **fig.9** makes evident of how the receiver of fig.7 is working on the two matrixes of fig.6 obtained at Side A and Side B, for achieving an unique final matrix according to the present invention.

## DETAILED DESCRIPTION OF AN EMBODIMENT OF THE INVENTION

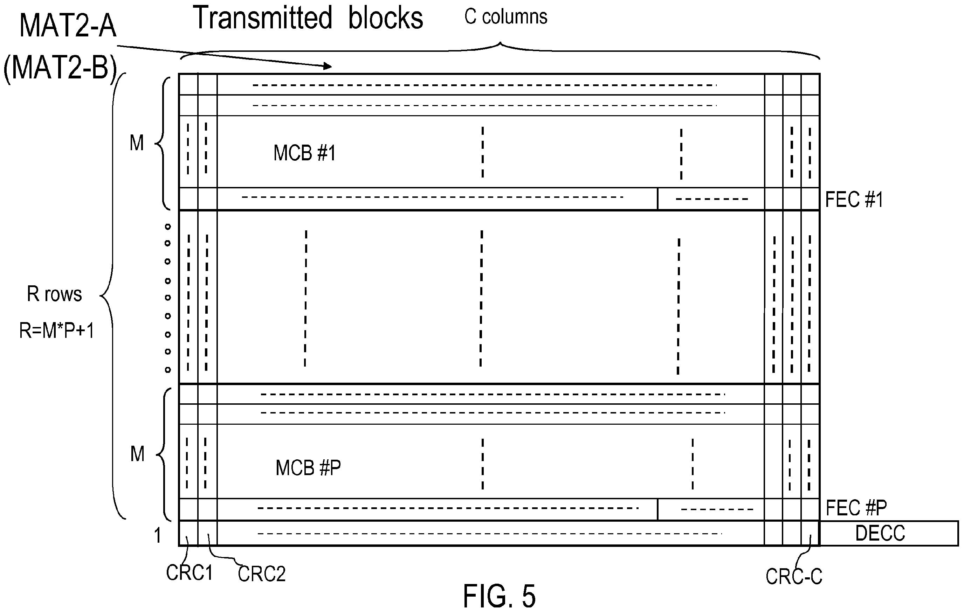

With reference to **fig.5** we see a matrix associated with a first sequence of codewords incoming to the receiver from a first transmission channel. The structure of MAT2 is the same as a companion matrix which accounts for a second sequence of codewords incoming to the receiver from a second transmission channel. The two sequences start equal at the transmission side an then may differ at the receiver side because of the statistical independence of the noise on the two channels.

It is useful point out that the sequential transmission / reception of all information words and the associated FECs and CRCs fields, so as the relevant processing, is not changed by the fat that they are seen as organized into a matrix MAT2 compound of *R* rows and *C* columns. This means that MAT2 is formed by *R x C* words. Each word is a collection of *W* bits. Each column is error protected by Cyclic Redundancy Code (CRC). The whole Cyclic Redundancy Codes are error protected by a Dedicated Error Correction Code (DECC). *M* rows form a Matrix Code Block (MCB) and are code protected by Forward Error Correction code (FEC). A simple relationship exists between the total number or row *R*, the number P of MCB blocks, and the number of rows M inside each MCB:

$$R = (M \times P) + 1. \tag{1}$$

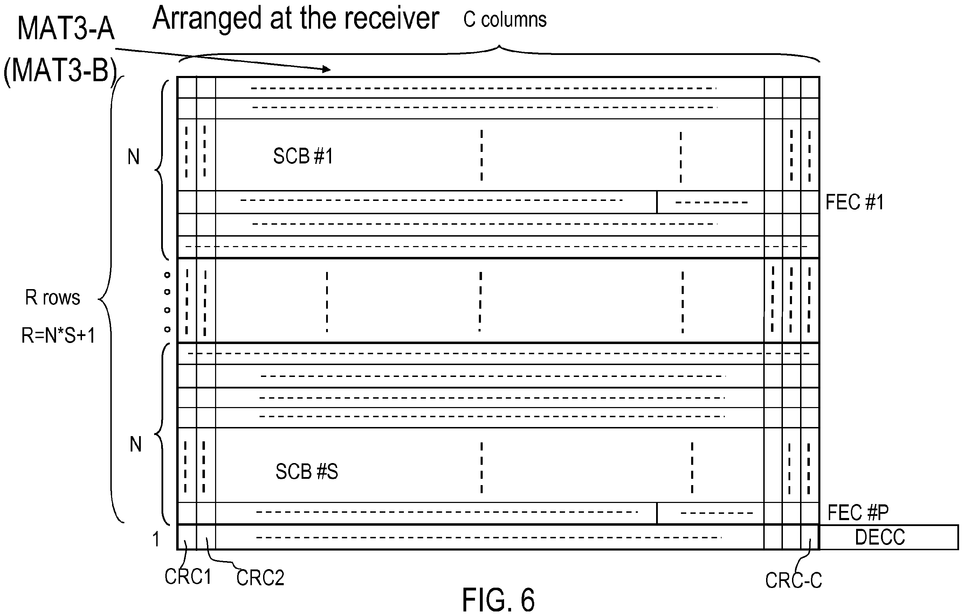

In **fig.6** we see a second matrix MAT3 which differs from MAT2 by only a different organization of the *M x P* codewords inside each column. With reference to **fig.6**, we see that each column is moreover partitioned into *S* sub-columns (SC) of $N$ words each. This means that the matrix MAT3 is divided $S \times C$ sub-columns, that can be considered as grouped into $S$ sub-column blocks (SCB) each of $N \times C$ words, so that the following simple relationship exists between the total number of rows $R$, the number of sub-columns $S$ for column, and the number of rows $N$ inside each sub-column:

$$R = (N \times S) + 1. \tag{2}$$

Expressions (1) and (2) lead to the relationship:

$$M \times P = N \times S \tag{3}$$

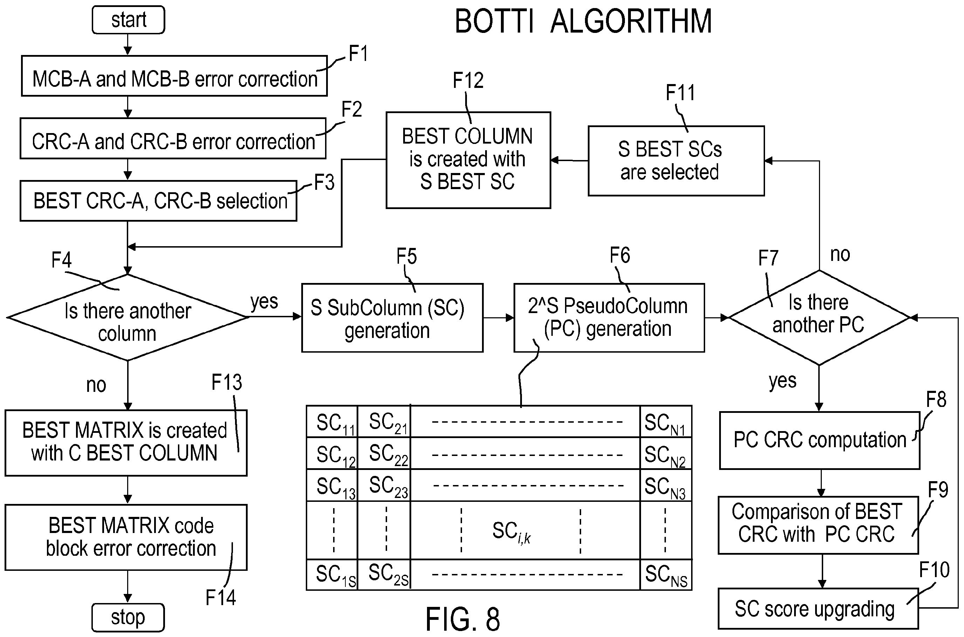

Each sub-column is unambiguously located by means of two index, namely, column index $i$ and sub-column index $k$, as shown in the table reported in the bottom part of **fig.8.**

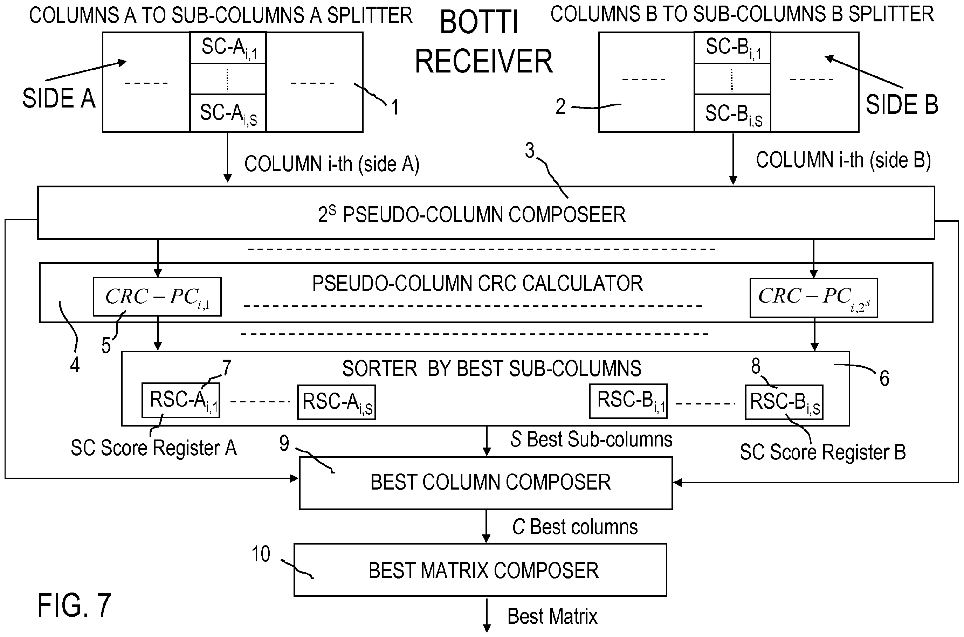

**Fig.7** shows the functional architecture of a receiver of both sequential matrixes MAT2-A and MAT2-B from Side A and Side B. For the sake of simplicity some initial blocks operating on MAT2-A and MAT2-B are not reported in the figure, these blocks are devoted to: a) process the FEC fields of the $P$ MCB block codes and execute the error correction; b) process the field DECC and execute the error correction on the last row including all CRC fields of the C columns; c) selecting the best one of the two all-CRC-rows on the basis of the two DECC syndromes.

Downstream the omitted blocks, the receiver includes two units respectively called "Columns A to sub-columns A Splitter", unit 1, and "Columns B to sub-columns B Splitter", unit 2. These units rearrange both matrixes MAT2-A and MAT2-B, after being corrected, into corresponding matrixes MAT3-A and MAT3-B. The contents of the latter matrixes are depicted in the figure for the S sub-columns (SC-A $_{i,1}$, ........, SC-A $_{i,S}$) belonging to a generic column $i$ of MAT3-A, and for the S sub-columns (SC-B $_{i,1}$, ......., SC-B $_{i,S}$). belonging to the same column $i$ of MAT3-B. Two columns with the same index $i$ of MAT3-A and MAT3-B are forwarded to a combining block 3 called "2$^S$ PSEUDO COLUMN FORMATTER". Said block combines the $S$ sub-columns of the column $i$ of the two matrixes MAT3-A and MAT3-B into all possible 2$^S$ so-called "pseudo-columns" corresponding to groups of $S$ sub-columns sorted by the same sub-column index $k$.

The following is an example of the output of block 3 limitedly to two columns $i$ compound by 4 sub-columns $SC_{i,k}$.

MAT3-A column i (transposed) $SC_{i1}^{A}$, $SC_{i2}^{A}$, $SC_{i3}^{A}$, $SC_{i4}^{A}$;

MAT3-B column i (transposed) $SC_{i1}^{B}$, $SC_{i2}^{B}$, $SC_{i3}^{B}$, $SC_{i4}^{B}$.

Contents of the 16 pseudo-columns (the columns of the table):

| $SC_{i1}^{A}$ | $SC_{i1}^{A}$ | $SC_{i1}^{A}$ | $SC_{i1}^{A}$ | $SC_{i1}^{A}$ | $SC_{i1}^{A}$ | $SC_{i1}^{A}$ | $SC_{i1}^{A}$ | $SC_{i1}^{B}$ | $SC_{i1}^{B}$ | $SC_{i1}^{B}$ | $SC_{i1}^{B}$ | $SC_{i1}^{B}$ | $SC_{i1}^{B}$ | $SC_{i1}^{B}$ | $SC_{i1}^{B}$ |
|---|---|---|---|---|---|---|---|---|---|---|---|---|---|---|---|
| $SC_{i2}^{A}$ | $SC_{i2}^{A}$ | $SC_{i2}^{A}$ | $SC_{i2}^{A}$ | $SC_{i2}^{B}$ | $SC_{i2}^{B}$ | $SC_{i2}^{B}$ | $SC_{i2}^{B}$ | $SC_{i2}^{A}$ | $SC_{i2}^{A}$ | $SC_{i2}^{A}$ | $SC_{i2}^{A}$ | $SC_{i2}^{B}$ | $SC_{i2}^{B}$ | $SC_{i2}^{B}$ | $SC_{i2}^{B}$ |
| $SC_{i3}^{A}$ | $SC_{i3}^{A}$ | $SC_{i3}^{B}$ | $SC_{i3}^{B}$ | $SC_{i3}^{A}$ | $SC_{i3}^{A}$ | $SC_{i3}^{B}$ | $SC_{i3}^{B}$ | $SC_{i3}^{A}$ | $SC_{i3}^{A}$ | $SC_{i3}^{B}$ | $SC_{i3}^{B}$ | $SC_{i3}^{A}$ | $SC_{i3}^{A}$ | $SC_{i3}^{B}$ | $SC_{i3}^{B}$ |
| $SC_{i4}^{A}$ | $SC_{i4}^{B}$ | $SC_{i4}^{A}$ | $SC_{i4}^{B}$ | $SC_{i4}^{A}$ | $SC_{i4}^{B}$ | $SC_{i4}^{A}$ | $SC_{i4}^{B}$ | $SC_{i4}^{A}$ | $SC_{i4}^{B}$ | $SC_{i4}^{A}$ | $SC_{i4}^{B}$ | $SC_{i4}^{A}$ | $SC_{i4}^{B}$ | $SC_{i4}^{A}$ | $SC_{i4}^{B}$ |

The 2$^S$ pseudo-columns originated as above are stored into a register of 2$^S$ positions addressed by an index r varying from 1 to 2$^S$. Each position of the register has a parallelism of $N$ words. The 2$^S$ pseudo-columns are read by a computation unit 4, which performs the 2$^S$ parity checks and memorizes all 2$^S$ CRC results into corresponding CRC-PC$_{i,r}$ registers 5 (index r varying from 1 to 2$^S$). The computation performed by unit 4 consists of recalculating the CRC pseudo-column by pseudo-column, and compare it to the CRC stored in column $i$ of the best-CRC-row previously selected from either MAT2-A or MAT2-B.

The 2$^S$ outcomes of the CRC checks relevant to the CRC-PC$_{i,r}$ registers 5 are forwarded to a Sorter unit 6 which increments a score assigned to each sub-column, according to a method that will be explained soon. To this purpose unit 6 includes $S$ Score registers 7, called RSC-A $_{i,1}$, ......., RSC-A $_{i,S}$ associated to the sub-columns of Side A, and $S$ Score registers 8, called RSC-B $_{i,1}$, ......., RSC-A$_{i,S}$ associated to the sub-columns of Side B. When the scores algorithm terminates, it selects the $S$ best sub-columns $SC_{i,k}$ to be forwarded to a Unit 9 placed downstream. Selection is carried out in correspondence of each increment of index $k$ ($1 \leq k \leq S$) by keeping either a sub-column of Side A or Side B with lowest score and discarding the other one.

Unit 9 receives a group *i* of *S* best sub-columns indexed as said above, and builds in correspondence a best column *i* that is forward to a Best Matrix Composer Unit 10.

The latter stores the C best columns i (1 ≤ *i* ≤ *C*), obtaining a best matrix, to say a matrix hosting the most reliable transmitted data sequence, optionally further submitted to the FEC algorithm.

**Fig.8** is a flow chart of the processing carried out by the receiver of **fig.7** in pursuing the best exploitation of the redundant reception. BOTTI (Best Of Two Transmitted Information) algorithm is based on the reception of two independent images of the same stream of information through a couple of channels physically independent. We have called them "side A" and "side B" images. The information must be organized in a matrix as depicted in the figures. The method starts in step **F1** in which each Matrix Code Block (MBC) of both signal paths is error corrected by means of FEC. In the following step **F2** CRC information of both signal paths are error corrected by means of DECC. In step **F3** best CRC information is selected in order to minimize error on CRC.

Generally speaking, after FEC algorithm, the two images are still affected by a residual bit error rate. In order to eliminate this residual BER the two images must be decomposed and the recomposed into a best matrix. Step **F4** controls the iterations of steps F5 to F12 constituting a cycle for obtaining a best column at each iteration. In step **F5** each column is divided into *S* sub-columns (SC). Each sub-column is compound of $N = (R\text{-}1)/S$ words. In step **F6** $Q = 2^S$ pseudo-columns (PC) are generated by permuting the S sub-columns of both signal paths. Step **F7** controls the iterations of steps F8 to F10 constituting a cycle for assigning a score to every sub-column of Side A and Side B. In step **F8** for each pseudo-column the Cyclic Redundancy Code is calculated. In step **F9** the value of CRC calculated at the previous step is compared with the BEST CRC selected at step F3. In step **F10** a score of 1 is added to the score of each sub-column belonging to a pseudo-column which calculated CRC is different from BEST CRC. In step **F11** *S* sub-columns with lower scores, between corresponding sub-columns belonging to the two signal path, is elected as BEST SC. In step **F12** the BEST COLUMN is generated with S BEST SC. Take care that the operations needed to identify the BEST COLUMN starting from the $2^S$ comparison results can easily be performed by means of a ROM. In step **F13** the BEST MATRIX is generated with C BEST COLUMN. In the optional step **F14** forward error correction is performed on the achieved BEST MATRIX.

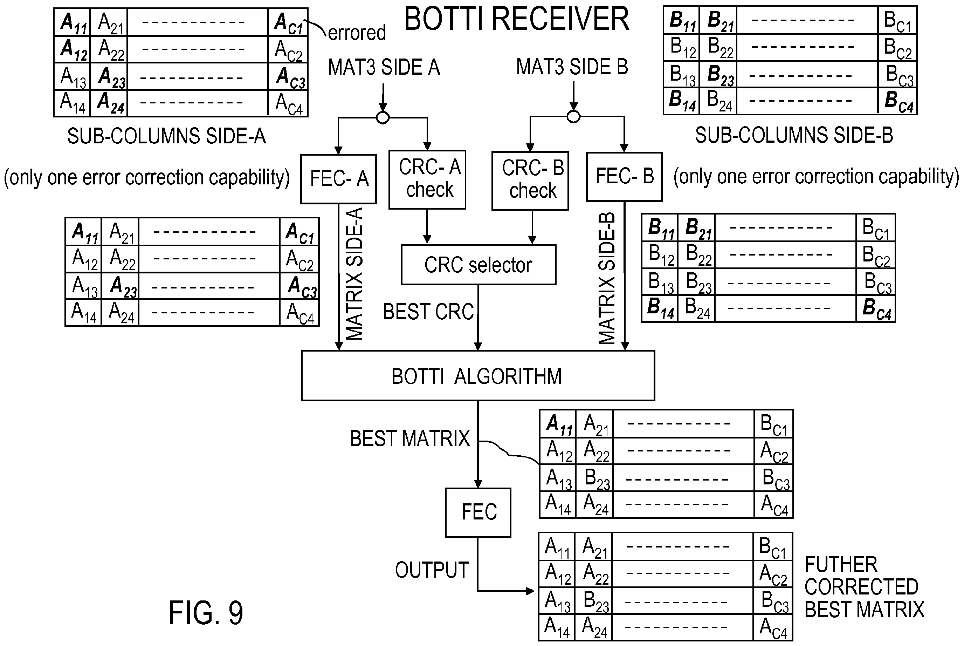

**Fig.9** shows the BOTTI algorithm at work in the redundant/diversity receiver of **fig.7.** The receiver operates on two exemplary matrixes of the two images received at Side A and Side B structured so as to include four sub-columns for C columns. The sub-columns are indicated as $A_{i,k}$ for Side A and $B_{i,k}$ for Side B (only three columns are depicted for the sake of simplicity). The topmost two matrixes are the received images including errored sub-columns indicated in bold italic. A single error for each sub-column has been considered for sake of simplicity. The intermediate matrixes are the former matrixes after being subjected to a FEC algorithm with only one error correction capability. The rows with two errors simultaneously remain unchanged. It can be notice that two rows at Side A are completely corrected so as one row at Side B, while the double errored rows remain unchanged. After being submitted to the BOTTI algorithm the BEST matrix includes one only errored row which can be corrected by the further application of FEC. In conclusion, the synergism of BOTTI algorithm with traditional FEC is proved.

Hereafter, a more precise comparative analysis will be developed on Residual BER after switching according to either prior art or BOTTI algorithm than the example of **fig.9** If either of the channel has deteriorated due to equipment or cable problems or because of radio fading or if occasional bit errors are experienced as a result of process on the physical link, quality may be improved by choosing the better of the two signals carried on the two channels transmission. Obviously, the modalities of the choice are different between the BOTTI algorithm end those of the prior art.

**Prior art receivers' BER after switching (Receivers of figs. 3 and 4)**

In order to analyze the improvement in term of residual BER, achieved by the prior art errorless switching scheme, we assume that error on a channel can always be completely eliminated if the other channel has no errors in the block in question. If the corresponding blocks on the two channels have errors simultaneously, then no switching takes place and errors remain unchanged in those particular blocks.

In the prior art case, the new BER (after switching) on channel 1 (Side A) is found to be:

$$BER_1 = p_1 \cdot P(x_2 > 0),$$

where $p_1$ is the average residual BER after block code correction on the first channel and P($x_2$>0) is the probability of having any number of bit errors (from 1 to *n*) in a block of *n* bits on the second channel (Side B). The probability P($x_2$>0) can be found from the binomial distribution P($x_2$) which gives the probability of having exactly $x_2$ bits in error in a block of n bits:

$$P(x_2) = \frac{n!}{x_2!(n-x_2)!} p_2^{x_2}(1-p_2)^{n-x_2}$$

The probability of having any number of bit errors is:

$$P(x_2 > 0) = (1 - p(x_2 = 0)) = 1 - (1-p_2)^n \cong np_2$$

where $p_2$ is the average residual BER after block code correction on the second channel. The approximation holds for $p_2$ close to zero.

Similarly, the new BER, after switching, on the second channel is found to be:

$$BER_2 = P_2 \cdot P(x_1 > 0) \cong np_1 p_2,$$

where the approximation holds for $p_1$ close to zero.

In the case of **fig.2** the number n of bits in a block is

$n = MCW$

This lead to an equivalent residual BER after switching of

$$BER \cong MCWp_1 p_2.$$

**BOTTI based receiver's BER after switching (Receiver of fig.7)**

In order to analyze the improvement in term of residual BER, achieved by the proposed errorless switching scheme, we assume that error on a channel can always be completely eliminated if the other channel has no errors in the block in question. If the corresponding blocks on the two channels have errors simultaneously, errors can't be eliminated when at least a couple of corresponding sub-columns, between all the couple belonging to the same column, is contemporaneously affected by error.

In the case of BOTTI based receiver of **fig.7**, still using binomial distribution, the probability of having any number of bit errors in a received sub-column in side A is:

$$P_{SCsideA}(x > 0) = (1 - P(x = 0)) = 1 - (1-p_1)^n \cong np_1$$

where $p_1$ is the average residual BER after block code correction on side A and we assumed that $p_1$ is close to zero and n is the total number of bits per sub-column.

Since $n = NW$, we have:

$$P_{SCsideA}(x > 0) \cong NWp_1$$

At the same way the probability of having any number of bit errors in a received sub-column in side B is:

$$P_{SCsideB}(x > 0) \cong NWp_2$$

Considering statistically independent event the error occurred in "side A" and in "side B" signal paths (this is reasonable taking into account that the two channels are physically independent), the probability of receiving corresponding sub-columns that are contemporaneously affected by error is:

$$P_{SCbothsides}(x > 0) = P_{SCsideA}(x > 0) \cdot P_{SCsideB}(x > 0) \cong N^2 W^2 p_1 p_2.$$

Since the FEC algorithm fails when at least a couple of corresponding sub-columns are contemporaneously affected by error, it's easy demonstrate that the probability that the algorithm leads to a BEST COLUMN affected by errors is:

$$P_{BEST-COLUMN}(x>0) = \sum_{1}^{s} P_{SCbothsides}(x>0) \cong S\ N^2 W^2 p_1 p_2$$

On another way, considering the equivalent residual BER, since each column is compound of SNW bits, the probability of having a BEST COLUMN affected by errors is:

$$P_{BEST-COLUMN}(x>0) \cong SNW \cdot BER$$

This leads to an equivalent residual BER after switching of:

$$BER \cong NWp_1 p_2$$

Further improvement on residual BER can be achieved by applying the forward error correction algorithm on the BEST MATRIX. This improvement, that can be significant, is code dependent and is going to be neglected in comparison results.

**Equivalent residual BER after switching comparison**

In the previous paragraphs we had calculated for previous-art and BOTTI-based receivers the equivalent residual BERs after switching. Using subscripts PA (Prior Art) and BOTTI for distinguishing the two cases. We have:

$$BER_{PA} \cong MCWp_1 p_2\,,$$

and

$$BER_{BOTTI} \cong NWp_1 p_2\,.$$

We can now easily calculate the performance improvement (G) in term of residual BER due to the introducing of the proposed algorithm:

$$G = \frac{BER_{PA}}{BER_{MATRIX}} = \frac{MCWp_1 p_2}{NWp_1 p_2} = \frac{MC}{N}$$

The performance improvement (Gain G) increases with *M* (code block row number) and *C* (code block column number) and decreases with *N* (sub-column row number). The expression of *G* suggests to adopt long block codes partitioned into many short sub-columns, trading-off between improvement on residual BER and the increasing complexity of the BOTTI-based receiver.
Further performance improvement can be obtained by considering the opportunity of applying the forward error correction algorithm on the BEST MATRIX.
Although the invention has been described with particular reference to a preferred embodiment, it will be evident to those skilled in the art, that the present invention is not limited thereto, but further variations and modifications may be applied without departing from the scope of the invention as defined by the annexed claims.

**References**

[Ref.1] Jon G. Proakis, "DIGITAL COMMUNICATIONS", fourth edition; published by McGraw-Hill, year 2001, ISBN 0-07-232111-3.

**Used acronyms**

| | |
|---|---|
| BER | Bit Error Rate |
| BOTTI | Best Of Two Transmitted Information |
| CRC | Cyclical Redundancy Code / Cyclical Redundancy Check |
| DECC | Dedicated Error Correction Code |
| FEC | Forward Error Correction |
| MAC | Medium Access Control |
| MCB | Matrix Code Block |
| MIMO | Multiple Input Multiple Output |
| PA | Prior Art |
| PC | Pseudo-Column |
| SC | Sub-Column |
| SIMO | Single Input Multiple Output |
| TDM | Time Division Multiplexing |

**Claims**

**1.** Method of communication, including the steps of:

- receiving from two independent channels (Side A, Side B) at least a first and a second respective sequence of information words, identical at the transmission side, each sequence being considered as spanning M consecutive rows of a respective first (MAT2-A) and second matrix (MAT2-B) of C columns, both first and second matrixes (MAT2-A, MAT2-B) including an error check code (CRC1, CRC2,....., CRC-C) at the end of each one of the C columns of said matrixes relevant to the M information words of that column which error check codes form an additional row of error check codes of both the first (MAT2-A) and second matrix (MAT2-B),

**characterized in that** it further includes the steps of

- receiving a dedicated field of error correction code (DECC) error protecting the additional row of error checking Cyclic Redundancy Codes;
- selecting the best additional row of all error check codes of the first matrix and the additional row of all error check codes of the second matrix, on the basis of the check of respective dedicated error correction code;
- partitioning (MAT3-A, MAT3-B) each column of both matrixes (MAT2-A, MAT2-B) into a number S of subcolumns each one of N information words (SCB #1,....., SCB #S);
- for every couple of columns which correspond in both partitioned matrixes (MAT3-A, MAT3-B), performing (3) all possible combinations of sub-columns taken from the first or the second partitioned matrix without changing the position they had in the original column, obtaining $2^S$ composite columns each of S sub-columns;
- for each group of $2^S$ composite columns, calculating (4) the $2^S$ error check codes of the composite columns and compare the calculated code with the error check code stored in said best additional row at the position of the couple of columns originating the group;
- for each group of $2^S$ composite columns, incrementing (6) a score assigned to each sub-column every time a composite column which includes it fails the parity check;
- for each group of $2^S$ composite columns, selecting (6) the S best sub-columns with the lowest score for building (9) a corresponding best column of a final best matrix (10) containing an improved reception of the originally transmitted sequence of information words.

**2.** The method of claim 1, **characterized in that** said first and second matrixes (MAT2-A, MAT2-B) further includes other respective sequences of information words, all coincident at the transmission side, each sequence spanning consecutive rows of the filled matrix and contributing to the error check code (CRC1, CRC2,....., CRC-C) together with the first and the second sequence of information words.

**3.** The method of claim 1 or 2, **characterized in that** each of said first, second, and other respective sequences of information words is mapped into a block code including an error correction code (FEC #1, ....., FEC #P).

4. The method of claim 1, **<u>characterized in that</u>** said sequence of information words stored in the best matrix is further subjected to forward error correction.

5. Receiver (RX-e, RX-w), **<u>characterized by</u>** the fact of having means for implementing the method described in the previous claims.

**Patentansprüche**

1. Kommunikationsverfahren, das die folgenden Schritte umfasst:

- Empfangen von zwei unabhängigen Kanälen (Side A, Side B) wenigstens einer ersten bzw. einer zweiten Folge von Informationswörtern, die auf der Sendeseite identisch sind, wobei jede Folge als M aufeinander folgende Zeilen einer ersten Matrix (MAT2-A) bzw. einer zweiten Matrix (MAT2-B) mit C Spalten aufspannend aufgefasst wird, wobei sowohl die erste als auch die zweite Matrix (MAT2-A, MAT2-B) einen Fehlerprüfcode (CRC1, CRC2, ..., CRC-C) am Ende jeder der C Spalten der Matrizen enthält, der für die M Informationswörter jener Spalte relevant sind, wobei die Fehlerprüfcodes eine zusätzliche Zeile von Fehlerprüfcodes sowohl der ersten Matrix (MAT2-A) als auch der zweiten Matrix (MAT2-B) bilden,

ferner **gekennzeichnet durch** die folgenden Schritte:

- Empfangen eines dedizierten Feldes eines Fehlerkorrekturcode-Fehlers (DECC-Fehler), das die zusätzliche Reihe von Fehlerprüfcodes mit zyklischer Redundanz schützt;
- Auswählen der besten zusätzlichen Zeile sämtlicher Fehlerprüfcodes der ersten Matrix und der zusätzlichen Zeile sämtlicher Fehlerprüfcodes der zweiten Matrix anhand der Prüfung des jeweiligen dedizierten Fehlerkorrekturcodes;
- Partitionieren (MAT3-A, MAT3-B) jeder Spalte beider Matrizen (MAT2-A, MAT2-B) in eine Anzahl S von Unterspalten, wovon jede aus N Informationswörtern (SCB #1, ..., SCB #S) besteht;
- für jedes Paar von Spalten, die sich in beiden partitionierten Matrizen (MAT3-A, MAT3-B) entsprechen, Ausführen (3) sämtlicher möglicher Kombinationen von Unterspalten, die der ersten oder der zweiten partitionierten Matrix entnommen werden, ohne die Position, die sie in der ursprünglichen Spalte hatten, zu ändern, wodurch $2^S$ Verbundspalten, wovon jede S Unterspalten besitzt, erhalten werden;
- für jede Gruppe von $2^S$ Verbundspalten Berechnen (4) der $2^S$ Fehlerprüfcodes der Verbundspalten und Vergleichen des berechneten Codes mit dem Fehlerprüfcode, der in der besten zusätzlichen Reihe an der Position des Paars von Spalten, aus der die Gruppe hervorgeht, gespeichert ist;
- für jede Gruppe von $2^S$ Verbundspalten Inkrementieren (6) einer Punktzahl, die jeder Unterspalte jedes Mal, wenn eine Verbundspalte, die sie enthält, die Paritätsprüfung nicht besteht, zugewiesen wird;
- für jede Gruppe von $2^S$ Verbundspalten Auswählen (6) der S besten Unterspalten mit der niedrigsten Punktzahl, um eine entsprechende beste Spalte einer endgültigen besten Matrix (10) zu erstellen (9), die einen verbesserten Empfang der ursprünglich gesendeten Folge von Informationswörtern enthält.

2. Verfahren nach Anspruch 1, **dadurch gekennzeichnet, dass** die erste und die zweite Matrix (MAT2-A, MAT2-B) ferner andere jeweilige Folgen von Informationswörtern enthalten, die auf der Sendeseite alle übereinstimmen, wobei jede Folge aufeinander folgende Zeilen der gefüllten Matrix aufspannen und zu dem Fehlerprüfcode (CRC1, CRC2, ..., CRC-C) zusammen mit der ersten und der zweiten Folge von Informationswörtern beitragen.

3. Verfahren nach Anspruch 1 oder 2, **dadurch gekennzeichnet, dass** die erste, die zweite und andere jeweilige Folgen von Informationswörtern auf einen Blockcode abgebildet werden, der einen Fehlerkorrekturcode (FEC #1, ..., FEC #P) enthält.

4. Verfahren nach Anspruch 1, **dadurch gekennzeichnet, dass** die Folge von Informationswörtern, die in der besten Matrix gespeichert sind, ferner einer Vorwärtsfehlerkorrektur unterworfen wird.

5. Empfänger (RX-e, RX-w), **dadurch gekennzeichnet, dass** er Mittel besitzt, um das Verfahren, das in den vorhergehenden Ansprüchen beschrieben worden ist, zu implementieren.

**Revendications**

1. Un procédé de communication, comprenant les étapes suivantes :

   - la réception à partir de deux canaux indépendants (Côté A, Côté B) d'au moins une première séquence et une deuxième séquence de mots d'informations respectives, identiques au niveau du côté transmission, chaque séquence étant considérée couvrir M rangées consécutives d'une première matrice (MAT2-A) et d'une deuxième matrice respectives (MAT2-B) de C colonnes, à la fois la première matrice et la deuxième matrice (MAT2-A, MAT2-B) comprenant un code de vérification d'erreur (CRC1, CRC2 ,....., CRC-C) au niveau de l'extrémité de chacune des C colonnes desdites matrices concernant les M mots d'informations de cette colonne dont les codes de vérification d'erreur forment une rangée additionnelle de codes de vérification d'erreur à la fois de la première matrice (MAT2-A) et de la deuxième matrice (MAT2-B),

   **caractérisé en ce qu'**il comprend en outre les étapes suivantes :

   - la réception d'un champ dédié de code de correction d'erreur (DECC) protégeant contre les erreurs la rangée additionnelle d'une vérification d'erreur de codes de redondance cycliques,
   - la sélection de la meilleure rangée additionnelle de la totalité des codes de vérification d'erreur de la première matrice et de la rangée additionnelle de la totalité des codes de vérification d'erreur de la deuxième matrice en fonction de la vérification d'un code de correction d'erreur dédié respectif,
   - le partitionnement (MAT3-A, MAT3-B) de chaque colonne des deux matrices (MAT2-A, MAT2-B) en un nombre S de sous-colonnes, chacune de N mots d'informations (SCB n°1 ,....., SCB n°S),
   - pour chaque couple de colonnes qui correspondent dans les deux matrices partitionnées (MAT3-A, MAT3-B), l'exécution (3) de la totalité des combinaisons possibles de sous-colonnes prises de la première ou de la deuxième matrice partitionnée sans modifier la position qu'elles avaient dans la colonne d'origine, l'obtention de $2^S$ colonnes composites, chacune de S sous-colonnes,
   - pour chaque groupe de $2^S$ colonnes composites, le calcul (4) des $2^S$ codes de vérification d'erreur des colonnes composites et la comparaison du code calculé au code de vérification d'erreur conservé en mémoire dans ladite meilleure rangée additionnelle au niveau de la position du couple de colonnes provenant du groupe,
   - pour chaque groupe de $2^S$ colonnes composites, l'incrémentation (6) d'un score attribué à chaque sous-colonne chaque fois qu'une colonne composite qui la comprend échoue au contrôle de parité,
   - pour chaque groupe de $2^S$ colonnes composites, la sélection (6) des S meilleures sous-colonnes avec le score le plus faible de façon à construire (9) une meilleure colonne correspondante d'une meilleure matrice finale (10) contenant une réception améliorée de la séquence de mots d'informations transmise à l'origine.

2. Le procédé selon la revendication 1, **caractérisé en ce que** ladite première matrice et ladite deuxième matrice (MAT2-A, MAT2-B) comprennent en outre d'autres séquences de mots d'informations respectives, toutes coïncidant au niveau du côté transmission, chaque séquence couvrant des rangées consécutives de la matrice remplie et contribuant au code de vérification d'erreur (CRC1, CRC2,....., CRC-C) conjointement avec la première et la deuxième séquence de mots d'informations.

3. Le procédé selon la revendication 1 ou 2, **caractérisé en ce que** chacune desdites première, deuxième et autres séquences de mots d'informations respectives est mise en correspondance avec un code de bloc contenant un code de correction d'erreur (FEC n°1, ....., FEC n°P).

4. Le procédé selon la revendication 1, **caractérisé en ce que** ladite séquence de mots d'informations conservée en mémoire dans la meilleure matrice est soumise en outre à une correction d'erreur sans voie de retour.

5. Un récepteur (RX-e, RX-w), **caractérisé en ce qu'**il possède un moyen de mise en ouvre du procédé décrit dans les revendications précédentes.

West                                                 East

TX-w     — Side A →     RX-e
         Side B

RX-w      ← Side A      TX-e
         Side B

**FIG. 1**

KNOWN ART
DIVERSITY
RECEIVERS

SIDE A ↓         ↓ SIDE B

| FEC-A | | FEC-B |

| CB-A COUNTER | | CB-B COUNTER |
| REG-A | | REG-B |

| COMPARATOR |

| SWITCH |

↓ OUTPUT

**FIG. 3**

SIDE A ↓         ↓ SIDE B

| FEC-A | | FEC-B |

| COMPARATOR |

| SWITCH |

↓ OUTPUT

**FIG. 4**

EP 2 234 305 B1

EP 2 234 305 B1

**MAT1-A (MAT1-B)**

C columns

KNOWN ART

M — MCB #1 ... FEC #1

R rows
R=M*P

M — MCB #P ... FEC #P

FIG. 2

FIG. 5

EP 2 234 305 B1

FIG. 6

EP 2 234 305 B1

FIG. 7

**BOTTI RECEIVER**

COLUMNS A TO SUB-COLUMNS A SPLITTER

COLUMNS B TO SUB-COLUMNS B SPLITTER

SIDE A

SIDE B

$SC\text{-}A_{i,1}$

$SC\text{-}A_{i,S}$

$SC\text{-}B_{i,1}$

$SC\text{-}B_{i,S}$

COLUMN i-th (side A)

COLUMN i-th (side B)

$2^S$ PSEUDO-COLUMN COMPOSEER

PSEUDO-COLUMN CRC CALCULATOR

$CRC-PC_{i,1}$

$CRC-PC_{i,2^S}$

SORTER BY BEST SUB-COLUMNS

$RSC\text{-}A_{i,1}$ —— $RSC\text{-}A_{i,S}$     $RSC\text{-}B_{i,1}$ —— $RSC\text{-}B_{i,S}$

SC Score Register A

SC Score Register B

$S$ Best Sub-columns

BEST COLUMN COMPOSER

$C$ Best columns

BEST MATRIX COMPOSER

Best Matrix

EP 2 234 305 B1

# BOTTI ALGORITHM

FIG. 8

EP 2 234 305 B1

BOTTI RECEIVER

| $A_{11}$ | $A_{21}$ | ---------- | $A_{C1}$ |
|---|---|---|---|
| $A_{12}$ | $A_{22}$ | ---------- | $A_{C2}$ |
| $A_{13}$ | $A_{23}$ | ---------- | $A_{C3}$ |
| $A_{14}$ | $A_{24}$ | ---------- | $A_{C4}$ |

errored

| $B_{11}$ | $B_{21}$ | ---------- | $B_{C1}$ |
|---|---|---|---|
| $B_{12}$ | $B_{22}$ | ---------- | $B_{C2}$ |
| $B_{13}$ | $B_{23}$ | ---------- | $B_{C3}$ |
| $B_{14}$ | $B_{24}$ | ---------- | $B_{C4}$ |

SUB-COLUMNS SIDE-A

MAT3 SIDE A          MAT3 SIDE B

SUB-COLUMNS SIDE-B

(only one error correction capability)    FEC- A    CRC- A check    CRC- B check    FEC- B    (only one error correction capability)

| $A_{11}$ | $A_{21}$ | ---------- | $A_{C1}$ |
|---|---|---|---|
| $A_{12}$ | $A_{22}$ | ---------- | $A_{C2}$ |
| $A_{13}$ | $A_{23}$ | ---------- | $A_{C3}$ |
| $A_{14}$ | $A_{24}$ | ---------- | $A_{C4}$ |

CRC selector

BEST CRC

MATRIX SIDE-A

MATRIX SIDE-B

| $B_{11}$ | $B_{21}$ | ---------- | $B_{C1}$ |
|---|---|---|---|
| $B_{12}$ | $B_{22}$ | ---------- | $B_{C2}$ |
| $B_{13}$ | $B_{23}$ | ---------- | $B_{C3}$ |
| $B_{14}$ | $B_{24}$ | ---------- | $B_{C4}$ |

BOTTI  ALGORITHM

BEST MATRIX

| $A_{11}$ | $A_{21}$ | ---------- | $B_{C1}$ |
|---|---|---|---|
| $A_{12}$ | $A_{22}$ | ---------- | $A_{C2}$ |
| $A_{13}$ | $B_{23}$ | ---------- | $B_{C3}$ |
| $A_{14}$ | $A_{24}$ | ---------- | $A_{C4}$ |

FEC

OUTPUT

| $A_{11}$ | $A_{21}$ | ---------- | $B_{C1}$ |
|---|---|---|---|
| $A_{12}$ | $A_{22}$ | ---------- | $A_{C2}$ |
| $A_{13}$ | $B_{23}$ | ---------- | $B_{C3}$ |
| $A_{14}$ | $A_{24}$ | ---------- | $A_{C4}$ |

FUTHER CORRECTED BEST MATRIX

FIG. 9

EP 2 234 305 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000349792 A


**Non-patent literature cited in the description**

- **JON G. PROAKIS.** DIGITAL COMMUNICATIONS. McGraw-Hill, 2001